# EUROPÄISCHE PATENTSCHRIFT

(11) **EP 2 354 598 B1**
(45) Veröffentlichungstag und Bekanntmachung des Hinweises auf die Patenterteilung: **08.05.2013**
(21) Anmeldenummer: 11153233.9
(22) Anmeldetag: 03.02.2011
(51) Int. Cl.: B23B 31/26, F16H 55/36

(54) **Set und Arbeitsspindel mit einer Riemenscheibe**
Set and work spindle with a pulley
Ensemble et broche de travail dotée d'une poulie à courroie

(30) Priorität: 03.02.2010 DE 102010007397
(43) Veröffentlichungstag der Anmeldung: 10.08.2011
(73) Patentinhaber: Hainbuch GmbH Spannende Technik, 71672 Marbach (DE)
(72) Erfinder: Weller, Hans-Michael, 71563, Affalterbach (DE)
(74) Vertreter: Patentanwälte Ruff, Wilhelm, Beier, Dauster & Partner

(56) Entgegenhaltungen:
- BE-A6- 1 012 574
- DE-A1- 3 930 405
- DE-A1- 19 541 790
- DE-A1-102005 025 538
- JP-A- 57 000 910

## Beschreibung

Die Erfindung betrifft einen Riemen und eine Riemenscheibe mit einem sich über einen Außenumfang erstreckenden Eingriffsbereich zur Kraftübertragung von der Riemenscheibe auf einen Riemen oder von einem Riemen auf die Riemenscheibe, wobei die Riemenscheibe mindestens zwei separate und gegeneinander zwischen einer ersten Relativlage und einer zweiten Relativlage bezüglich eines Freiheitsgrades bewegliche Eingriffsbauteile aufweist und wobei beide Eingriffsbauteile jeweils einen Teileingriffsbereich des sich über den Außenumfang erstreckenden Eingriffsbereichs der Riemenscheibe bilden und beide Teileingriffsbereichen Formgebungen, insbesondere mit Vertiefungen, aufweisen, die gemeinsam dazu geeignet sind bei Eingriff eines an die Formgebungen, insbesondere an die Vertiefungen, angepassten Riemens eine Relativverlagerung der Eingriffsbauteile hinsichtlich des Freiheitsgrades zu verhindern.

Darüber hinaus betrifft die Erfindung eine Arbeitsspindel für eine Werkzeugmaschine, bei der eine Riemenscheibe Verwendung findet, sowie eine Werkstück- oder Werkzeughaltevorrichtung einer Werkzeugmaschine mit einer solchen Arbeitsspindel.

Riemenscheiben sind aus dem Stand der Technik allgemein bekannt. Als Teil von Riemengetrieben dienen sie der Übertragung von Kräften bzw. Drehmomenten zwischen zwei zumeist zueinander parallel ausgerichteten Wellen.

Riemengetriebe bieten eine technisch einfache und kostengünstige Möglichkeit, mechanische Arbeit zwischen zwei voneinander beabstandeten Wellen zu übertragen. Problematisch an der Verwendung von Riemengetrieben ist jedoch die Gefahr des Riemenversagens. Ein Rei-βen des Riemens führt bei der Verwendung üblicher Riemenscheibe zum sofortigen vollständigen Verlust der Wirkkopplung zwischen den zuvor über den Riemen verbundenen Riemenscheiben. Dies stellt bei vielen Anwendungsfällen eine erhebliche Gefahr dar.

Eine besondere Gefahr besteht bei Arbeitsspindeln, die beispielsweise aus der DE 10 2005 025 538 A1 bekannt sind. Diese Arbeitsspindeln weisen eine Spanneinrichtung zur Aufnahme eines Werkzeugs oder insbesondere eines Werkstücks auf. Die im Betrieb rotierende Spanneinrichtung wird bei gattungsgemäßen Gestaltungen über eine Riemenscheibe gesteuert, die gegenüber der Arbeitsspindel um deren Spindelhauptachse drehbar gelagert ist. Die Riemenscheibe ist bestimmungsgemäß dafür verantwortlich, den Spannzustand am Werkstück oder am Werkzeug über die mittels des Riemens übertragenen Kräfte aufrechtzuerhalten. Sobald der Riemen beispielsweise aufgrund eines Riemenrisses versagt, kann die Spannkraft nicht mehr aufrechterhalten werden, so dass die Gefahr besteht, dass das zuvor eingespannte Werkstück unkontrolliert bei hohen Drehzahlen aus der Spanneinrichtung entgleitet. Hierdurch kann es zu erheblichen Schäden kommen, nicht zuletzt auch zu Personenschäden.

Aus dem Stand der Technik ist es bekannt, das Vorhandensein des Riemens mit elektronischen Hilfsmitteln zu überwachen, um ein Versagen des Riemens erkennen zu können und um darauf mit geeigneten Maßnahmen, beispielsweise durch Bremsen der betroffenen Wellen, reagieren zu können.

Eine gattungsgemäße zweigeteilte Riemenscheibe ist aus der DE 19541790 A1 bekannt. Bei ihr dient die Zweiteilung der Riemenscheibe dem Zweck, einen Spannungszustand im Riemen zu verursachen, um hierdurch eine Dämpfungswirkung zu erzielen.

### Aufgabe und Lösung

Aufgabe der Erfindung ist es insbesondere, eine Riemenscheibe zur Verfügung zu stellen, durch die es möglich ist, die Gefahr beim Versagen eines Riemens zu mindern.

Erfindungsgemäß wird dies dadurch erzielt, dass eine gattungsgemäße Riemenscheibe gemäß einer der beiden folgenden Alternativen oder entsprechend der Merkmale beider Alternativen weitergebildet wird.

Bei der ersten Alternative ist mindestens ein Stopperbauteil vorgesehen ist, welches bei Vorliegen der ersten Relativlage der Eingriffbauteile zueinander in einer ersten Position gesichert ist, in der es vollständig innerhalb eines durch die Eingriffsbauteile definierten Innenraum angeordnet ist, und welches bei Vorliegen der zweiten Relativlage der Eingriffsbauteile zueinander eine zweite Position einnehmen kann oder durch die Verlagerung der Eingriffsbauteile in die zweite Relativlage eine zweite Position einnimmt, in der es zumindest abschnittsweise aus dem Innenraum nach außen ragt.

Bei der zweiten Alternative ermöglicht der Freiheitsgrad zumindest auch eine Beweglichkeit der Eingriffsbauteile in einer Axialrichtung, wobei eine erste Federeinrichtung zwischen den Eingriffbauteilen derart angeordnet ist, durch die die Eingriffbauteile aus ihrer ersten Relativlage in Richtung ihrer zweiten Relativlage kraftbeaufschlagt sind.

Die Grundüberlegung der Erfindung ist, dass die erfindungsgemäße Riemenscheibe aus mindestens zwei Eingriffsbauteilen besteht, die im Regelbetrieb permanent gleichzeitig im Eingriff, d.h. im unmittelbaren Berührkontakt, mit dem Riemen stehen. Diese Eingriffsbauteile sind gegeneinander in Richtung des Freiheitsgrades nur dann beweglich, wenn der Riemen nicht mehr in seiner bestimmungsgemäßen Position ist. Die Relativbeweglichkeit hinsichtlich des Freiheitsgrades kann eine einfache rotative oder translative Beweglichkeit sein. Unter der Beweglichkeit hinsichtlich eines Freiheitsgrades wird jedoch auch eine Beweglichkeit mit überlagerter translativer und rotativer Richtung verstanden. Auch eine Beweglichkeit in mehreren aufeinander folgenden Bewegungsphasen mit jeweils verschiedener Richtung stellt eine Beweglichkeit hinsichtlich eines Freiheitsgrades im Sinne der Erfindung dar. Solange der Riemen seine bestimmungsgemäße Eingriffsposition hält, ist durch formschlüssiges Zusammenwirken des Riemens mit den Formgebungen, insbesondere den Vertiefungen, der Teileingriffsbereiche beider Eingriffsbauteile gewährleistet, dass eine Relativverlagerung hinsichtlich des Freiheitsgrades der Eingriffsbauteile nicht stattfinden kann. Sobald der Riemen beispielsweise durch Reißen desselben nicht mehr im Eingriff mit den Eingriffsbauteilen ist, wird eine Relativverlagerung der Eingriffsbauteile gegeneinander nicht mehr unterbunden, so dass es in Folge einer beliebig gearteten Kraftbeaufschlagung der Eingriffsbauteile zu einer solchen Relativverlagerung in Hinblick auf den genannten Freiheitsgrad kommen kann. Diese Relativverlagerung kann auf vielfältige Weise genutzt werden, um nach dem Versagen des Riemens einen gesicherten Zustand herzustellen. So ist ein gesicherter Zustand unmittelbar mechanisch in Reaktion auf die Relativverlagerung der Eingriffsbauteile bewirkbar.

Wie bereits erläutert, dient die erst nach dem Riemenversagen mögliche Relativverlagerung der Eingriffsbauteile dem Auslösen eines Mechanismus, der eine zweckmäßige Reaktion auf das Versagen des Riemens bietet.

Gemäß der ersten Alternative ist vorgesehen, dass hierzu insbesondere zur Erzielung einer mechanischen Bremswirkung oder Synchronisierungswirkung mindestens ein Stopperbauteil an der Riemenscheibe vorgesehen ist, welches getrennt von den beiden Eingriffsbauteilen ausgebildet ist und welches sich aus einem Innenraum der Riemenscheibe zum Zwecke der Bewirkung der Bremswirkung herausbewegen kann, sobald die Eingriffsbauteile ihre erste Relativlage verlassen haben.

Durch die Nutzung eines separaten Stopperbauteils kann die vorgesehene Relativverlagerung der Eingriffsbauteile zueinander sehr einfach ausgestaltet sein, da nicht eines der Eingriffsbauteile selbst unmittelbar die gewünschte Wirkung, beispielsweise eine Bremswirkung, erzielen muss. Stattdessen sichern bei einer Alternative dieser Gestaltung die Eingriffsbauteile in ihrer ersten Relativlage lediglich gemeinsam die erste Position des Stopperbauteils, die gleichsam dessen Ruheposition darstellt. Durch ihre Relativverlagerung gestatten es die Eingriffsbauteile in ihrer zweiten Relativlage, dass das Stopperbauteil zumindest abschnittsweise aus dem Innenraum der Eingriffsbauteile nach außen gelangt, um dort die gewünschte Wirkung, insbesondere eine Bremswirkung, zu erzielen. Von Vorteil ist es dabei, wenn die Sicherung des Stopperbauteils in der ersten Relativlage durch einen an einem der Eingriffsbauteile vorgesehenen Sicherungsabschnitt erfolgt und die Freigabe des Stopperbauteils in der zweiten Relativlage durch eine an diesem Eingriffsbauteil vorgesehene Ausnehmung ermöglicht wird. Die vorzugsweise stiftartig ausgebildeten Stopperbauteile können wie beschreiben als getrennt von beiden Eingriffsbauteilen bewegliche Bauteile ausgebildet sein. Es ist jedoch auch möglich, die Stopperbauteile ortsfest an einem der Eingriffsbauteile anzubringen, so dass sie gemeinsam mit diesem Eingriffsbauteil verlagert werden, wenn das betreffende Eingriffsbauteil relativ zum anderen Eingriffsbauteil seine zweite axiale Relativposition einnimmt.

Bei der zweiten Alternative ist alternativ zur ersten Variante vorgesehen, dass eines der Eingriffsbauteile selbst nach Erreichen der zweiten Relativlage gegen ein Gegenbauteil drückt und dadurch beispielsweise eine Bremswirkung erzielt. Diese Alternative ist allerdings auch mit der ersten Alternative gemeinsam realisierbar.

Bei der zweiten Alternative ist vorgesehen, dass die Eingriffsbauteile zumindest auch in Axialrichtung gegeneinander beabstandbar sind, um von der ersten Relativlage zur zweiten Relativlage zu gelangen. Dies gestattet es, unmittelbar die Axialverlagerung des einen Eingriffsbauteils zu Erzielung der gewünschten Wirkung heranzuziehen. So kann das bei Versagen des Riemens verlagerbare Eingriffsbauteil beispielsweise mit einer Stirnverzahnung oder eine anderweitigen stirnseitigen Profilierung ausgebildet sein, die bei Axialverlagerung dieses Eingriffsbauteils in Eingriff mit einem Gegenbauteil gelangt und somit in Synchronisation mit diesem Gegenbauteil kommt.

Bei der zweiten Alternative werden die Eingriffsbauteile beim Wechsel zu ihrer zweiten Relativposition zumindest auch axial bezogen auf die Drehachse der Riemenscheibe gegeneinander verlagert. Es muss sich jedoch nicht um einen rein axialen Freiheitsgrad handeln. Auch eine Relativbeweglichkeit mit einer rotativen Komponente um die Rotationsachse der Riemenscheibe und mit einer axialen Komponente kann zweckmäßig sein. Es ist vorgesehen, dass zwischen den Eingriffsbauteilen eine erste Federeinrichtung vorgesehen ist, die bei Wegfall des Riemens eine Kraftbeaufschlagung der Eingriffsbauteile gegeneinander bewirkt, die zumindest auch zur axialen Relativverlagerung führt. Hierzu kann die Federeinrichtung unmittelbar axial wirken. Sie kann jedoch auch mittelbar die axiale Relativbewegung bewirken, beispielsweise indem sie tangential wirkt und die rotative Relativbewegung der Eingriffsbauteile mit der axialen Relativbewegung der Eingriffsbauteile beispielsweise über eine Kulissenführung zwangsgekoppelt ist.

Die Federeinrichtung bewirkt, dass mit Wegfall des Riemens die Beabstandung der Eingriffsbauteile und damit die gewünschte Wirkung, insbesondere eine Bremswirkung oder Sychronisationswirkung, eintritt. Die zweite Alternative ist insbesondere, jedoch nicht ausschließlich zweckmäßig, wenn schlupfbehaftete Riemen Verwendung finden sollen. , bei denen jeweils kein Formschluss in Tangentialrichtung zwischen der Riemenscheibe und dem Riemen vorgesehen ist. In einem solchen Fall können die Vertiefungen in den beiden Eingriffsbauteilen der Riemenscheibe als umlaufende Nuten auszubilden, in die an der Innenseite des Riemens vorgesehene, voneinander quer zur Riemenhauptrichtung beabstandete und in Riemenhauptrichtung erstreckte Erhöhungen bzw. Keile eingreifen. Eine solche Erhöhung kann auch durch den rechteckigen oder trapezförmigen Querschnitt eines einfachen Flachriemens selbst gebildet werden. Diese Erhöhung oder Erhöhungen verhindern dann, dass die beiden Eingriffsbauteile sich bezogen auf die Drehachse der Riemenscheibe in Axialrichtung gegeneinander bewegen, solange der Riemen mit beiden Eingriffsbauteilen im Eingriff ist.

Eine besondere Gestaltung sieht dabei vor, dass die Riemenscheibe als Flachriemenscheibe mit einer zylindrischen Riemenfläche zur Auflage des Riemens aufweist, an die sich beidseitig umlaufende Stege zur axialen Führung des Riemens anschließen. Dabei ist jeweils ein umlaufender Steg ortsfest an einem Eingriffsbauteil angeordnet. Die Riemenfläche kann exklusiv an einem Eingriffsbauteil vorgesehen sein oder zweigeteilt sein und somit Teil beider Eingriffsbauteile sein. Gerade bei einer solchen Gestaltung kann zusätzlich die Verwendung von Stopperstiften vorteilhaft sein, die an einem Eingriffsbauteil vorgesehen sind und sich durch einen Innenbereich des zweiten Eingriffsbauteils hindurch erstrecken und aus diesem Innenbereich teilweise herausgedrückt werden, wenn die Eingriffsbauteile ihre zweite Relativlage einnehmen.

Bestimmungsgemäß ist vorgesehen, dass eines der Eingriffsbauteile axial ortsfest an einer mit der Riemenscheibe drehfest verbundene Welle zu befestigen ist, während das zweite Eingriffsbauteil im Versagensfalle des Riemens sich gegenüber diesem axial ortsfest zur Welle verbleibenden bewegt. Bei der genannten zweiten Alternative ist die axiale Verlagerung des zweiten Eingriffsbauteils relativ zu diesem axial zum Welle ortsfesten ersten Eingriffsbauteil so geartet, dass hiermit auch eine Verlagerung eines Stopperabschnitts am zweiten Eingriffsbauteil stattfindet, durch welche dieser Stopperabschnitt, beispielsweise die profilierte Stirnseite des zweiten Eingriffsbauteils oder am zweiten Eingriffsbauteil vorgesehene Stopperstifte, in eine exponierte Axialposition gebracht werden, die zur Herstellung einer Bremswirkung oder einer Synchronisierungswirkung geeignet ist.

Die axiale Verlagerung der Eingriffsbauteile kann unter der Maßgabe, dass diese exponierte Axialposition des Stopperabschnitts oder der Stopperstifte erreicht wird, sowohl aufeinander zu als auch voneinander weg erfolgen. Wenn die Eingriffsbauteile beim Übergang in ihre zweite Relativlage aufeinander zu bewegt werden, bedarf es jedoch eines Stopperabschnitts / stopperstiftes am zweiten Eingriffsabschnitt, der durch den ersten Eingriffsabschnitt hindurch verlagert wird, um diese exponierte Axialposition einnehmen zu können.

Sowohl die erste als auch die zweite Alternative können Verwendung finden, wenn die Riemenscheibe als Zahnriemenscheibe ausgebildet ist, wobei die Teileingriffsbereiche beider Eingriffsbauteile Verzahnungen aufweisen, deren Zähne zumindest zum Teil in der ersten Relativlage der Riemenscheibe miteinander fluchten. Als Zahnriemen wird im Zusammenhang mit der vorliegenden Erfindung jeglicher Riemen angesehen, dessen Kraftübertragung auf die korrespondierende Zahnriemenscheibe in Tangentialrichtung auf Formschluss basiert und somit schlupffrei erfolgt. Bei einem Zahnriemen wird die ohnehin vorgesehene Verzahnung im Eingriffsbereich der Riemenscheibe genutzt, um mittels des Zahnriemens eine Relativverlagerung der Eingriffsbauteile aus der ersten in die zweite Relativlage zu verhindern, solange der Zahnriemen in seiner bestimmungsgemäßen Eingriffslage ist.

Insbesondere bei einer solchen Zahnriemenscheibe ist es von Vorteil, wenn der Freiheitsgrad, bezüglich dessen die Eingriffsbauteile gegeneinander beweglich sind, eine rotative Beweglichkeit der Eingriffsbauteile um die Rotationsachse der Riemenscheibe umfasst, so dass die Eingriffsbauteile um diese Rotationsachse gegeneinander verdrehbar sind. Die Teileingriffsbereiche beider Eingriffsbauteile, die insbesondere über Verzahnungen gebildet werden können, erstrecken sich hierbei vorzugsweise jeweils über den Gesamtumfang der Riemenscheibe, um eine Drehbewegung der Eingriffsbauteile gegeneinander zuverlässig zu verhindern, solange der Riemen in seiner bestimmungsgemäßen Eingriffslage ist.

Auch bei der ersten Alternative ist es von Vorteil, wenn zwischen den Eingriffsbauteilen eine erste Federeinrichtung vorgesehen ist, mittels derer die Eingriffsbauteile gegeneinander derart verspannbar sind, dass sie bei Vorliegen der ersten Relativlage in Richtung der zweiten Relativlage federkraftbeaufschlagt sind. Diese erste Federeinrichtung ist dabei derart ausgebildet, dass sie permanent eine Kraft bzw. ein Moment bezüglich des Freiheitsgrades in Richtung der zweiten Relativlage der Eingriffsbauteile bewirkt. Solange die Eingriffsbauteile durch den Riemen in ihrer ersten Relativlage gehalten werden, bleibt dieser Spannungszustand der ersten Federeinrichtung bestehen. Sobald der Riemen jedoch durch Versagen nicht mehr zuverlässig im Eingriff mit den Eingriffsbereichen ist, wirkt sich die Kraft der ersten Federeinrichtung aus und die Eingriffsbauteile werden durch die erste Federeinrichtung in ihre zweite Relativlage verlagert.

In Hinblick auf das mindestens eine Stopperbauteil der ersten Alternative ist es besonders von Vorteil, wenn das Stopperbauteil an einem der Eingriffsbauteile in einer zur Drehachse der Riemenscheibe koaxialen Verschiebeführung geführt ist und bei Erreichen der zweiten Relativlage der Eingriffsbauteile zueinander entlang dieser Verschiebeführung axial durch eine Ausnehmung im anderen Eingriffsbauteil nach außen verschoben werden kann.

Die Relativverlagerung des Stopperbauteils kann auf verschiedene Weisen erzielt werden. So kann mittelbar die Fliehkraft genutzt werden, um das Stopperbauteil zu verlagern. Auch eine kontinuierlich wirkende Wirkkopplung des Stopperbauteils mit der Relativstellung der Eingriffsbauteile zueinander ist möglich. Von Vorteil ist es jedoch, wenn eine zweite Federeinrichtung vorgesehen ist, mittels derer das Stopperbauteil in Richtung seiner zweiten Position federbeaufschlagt wird, während es in seiner ersten Position gesichert ist. Diese zweite Federeinrichtung, die von der ersten Federeinrichtung getrennt ausgebildet ist, drückt das Stopperbauteil in dessen zweite Position, sobald die Relativlage der Eingriffsbauteile zueinander dies zulässt. Hierdurch kann eine kraftvolle und schlagartig eintretende Bremswirkung erzielt werden.

Vorzugsweise ist eine Mehrzahl von Stopperbauteilen vorgesehen, die derart angeordnet sind, dass sich bei Relativbewegung der Eingriffsbauteile zueinander gleichzeitig aus ihrer ersten Position in ihre zweite Position verlagert werden.

Bei der zweiten Alternative kann vorgesehen sein, dass die Eingriffsbauteile ausschließlich in einer Axialrichtung gegeneinander beweglich sind. Dies ist insbesondere bei Riemen vorteilhaft, die schlupfbehaftet arbeiten und die daher eine rein rotative Relativbewegung zwischen den Eingriffsbauteilen nicht zuverlässig verhindern können. Bei einer solchen Gestaltung ist vorgesehen, dass beide Eingriffsbauteile den Riemen in Axialrichtung jeweils derart umgreifen oder derartig mit den Eingriffsbauteilen im Eingriff sind, dass eine axiale Beabstandung der Eingriffsbauteile bei Vorhandensein des Riemens unterbunden wird. Dies kann in oben bereits beschriebener Weise auch dadurch erreicht werden, dass umlaufende Stege beidseitig des Riemens axial erst dann aufeinander zu bewegbar sind, sobald der Riemen versagt hat.

Von besonderem Vorteil ist eine Gestaltung, bei der die Eingriffsbauteile ausgehend von der ersten Relativlage zumindest in einer ersten Teilphase ihrer Relativbewegung in einer überlagerten axialen und rotativen Richtung gegeneinander beweglich sind. Hierbei ist vorgesehen, dass die Relativbewegung in Axialrichtung und in Rotationsrichtung zwangsgekoppelt sind, so dass eine axiale Beabstandung der Eingriffsbauteile erst möglich wird, wenn auch eine rotative Beweglichkeit gegeben ist. Hierdurch wird es möglich, einen Riemen wie beispielsweise einen Zahnriemen, der nur eine rotative Relativbewegung zuverlässig verhindert, mittelbar auch zur Verhinderung einer Axialbewegung zu nutzen. Besonders vorteilhaft ist es dabei, wenn die die Eingriffsbauteile in einer auf die erste Teilphase folgende zweite Teilphase der Relativbewegungen ausschließlich in Axialrichtung gegeneinander beweglich sind. Hierdurch wird erreicht, dass unter dem Eindruck der ersten Federeinrichtung nach Versagen des Riemen zunächst eine rotative und eine axiale Relativverlagerung der Eingriffsbauteile stattfindet, an die sich eine rein axiale Relativbewegung anschließt. Hierdurch wird erreicht, dass auch eine ungewollte Momentenbeaufschlagung der beiden Eingriffsabschnitte in Rotationsrichtung während dieser zweiten Teilphase nicht dazu führt, dass die Eingriffsabschnitte gegen die Kraft der ersten Federeinrichtung wieder ihre erste Relativlage einnehmen.

Die Relativbeweglich der Eingriffsabschnitte, insbesondere die oben beschriebenen überlagerte Relativbeweglichkeit in Axialrichtung und Rotationsrichtung, wird vorzugsweise durch eine Kulissenführung erzielt, mittels derer die Relativbeweglichkeit der Eingriffsbauteile gegeneinander definiert ist. Eine solche Kulissenführung umfasst eine Kulissenausnehmung in einem der Eingriffsbauteils, in der ein Kulissengleiter des anderen Eingriffsbauteils beweglich ist. Durch den Verlauf der Kulissenausnehmung kann die Relativbeweglichkeit der Eingriffsbauteile daher einfach hergestellt werden.

Im Falle einer Zahnriemenscheibe, insbesondere einer Zahnriemenscheibe mit gegeneinander um die Riemenscheibendrehachse verdrehbaren Eingriffsbauteile, handelt es sich bei dem Riemen um einen Zahnriemen einer solchen Breite, dass er gleichzeitig mit beiden Eingriffsbauteilen im Eingriff steht. Im Falle der oben beschriebenen Riemenscheibe zur Verwendung mit einem Flachriemen oder einem Keilriemen handelt es sich um einen derartigen Riemen mit auf der Innenseite vorgesehenen Erhebungen, die korrespondierend zu den umlaufenden nutartigen Vertiefungen an den beiden Eingriffsbauteilen vorgesehen sind.

Die Erfindung betrifft weiterhin eine Arbeitsspindel für eine Werkzeugmaschine mit einem Spindelhauptkörper, mit einer am Spindelhauptkörper vorgesehenen verstellbaren Spanneinrichtung zur Aufnahme eines Werkstücks oder Werkzeugs und mit einem um eine Spindelhauptachse gegenüber dem Spindelhauptkörper drehbar gelagerten Stellorgan, wobei die Spanneinrichtung derart ausgebildet ist, dass sie durch eine Relativbewegung des Stellorgans gegenüber dem Spindelhauptkörper verstellbar ist.

Derartige Arbeitsspindeln werden insbesondere zur Festlegung von Werkstücken an im Betrieb rotierenden Spindelhauptkörpern verwendet. Die Einspannung am Spindelhauptkörper dient dem Zweck, das mit dem Spindelhauptkörper gemeinsam rotierende Werkstück spanend bearbeiten zu können. Die Spanneinrichtung muss hierfür stets unter Spannung gehalten werden. Zu diesem Zweck wird das Stellorgan separat vom Spindelhauptkörper ebenfalls angetrieben. Sobald nach Einspannen des Werkstücks der gewünschte Spannungszustand an der Spanneinrichtung besteht, rotieren der Spindelhauptkörper und das Stellorgan zum Zwecke der spanenden Bearbeitung mit identischen Geschwindigkeiten. Durch geringfügige Variationen der Geschwindigkeiten und dadurch bewirkte Änderungen der Relativdrehstellung des Stellorgans zum Spindelhauptkörper kann auch während des Rotierens des Spindelhauptkörpers die Spannkraft an der Spanneinrichtung angepasst werden. Dies kann beispielsweise über Steuerkurven oder über einen auf ein Zugrohr wirkenden Gewindetrieb erreicht werden.

Erfindungsgemäß ist vorgesehen, dass mindestens eine Riemenscheibe des oben beschriebenen Typs drehfest zum Spindelhauptkörper und/oder drehfest zum Stellorgan vorgesehen ist, um das erforderliche Antriebsdrehmoment des Spindelhauptkörpers bzw. das Stellmoment der Spanneinrichtung über das Stellorgan bereitzustellen. Die erfindungsgemäße Riemenscheibe erlaubt es, dass in dem Augenblick des Reißens des Riemens über die dadurch bewirkte Relativverlagerung der Eingriffsbauteile der Riemenscheibe eine Bremswirkung bzw. Synchronisierungswirkung zwischen dem Spindelhauptkörper und dem Stellorgan bewirkt wird, so dass der Spannzustand am Werkstück bzw. Werkzeug erhalten bleibt und ein unkontrolliertes Trennen des Werkstücks bzw. Werkzeugs von der Spindel verhindert wird.

Durch die Ausgestaltung mit einer erfindungsgemäßen Riemenscheibe wird erreicht, dass durch die axiale Bewegung des mindestens einen Stopperbauteils oder des einen Eingriffsbauteils nach Versagen des Riemens eine formschlüssige oder reibschlüssige Kopplung zwischen dem Spindelhauptkörper und dem Stellorgan bewirkt wird. Eine reibschlüssige Gestaltung kann dabei dadurch erzielt werden, dass das mindestens eine Stopperbauteil oder das axial verlagerte Eingriffsbauteil in seiner zweiten Position, im Falle des Stopperbauteils vorzugsweise unter der Wirkung der zweiten Federeinrichtung, gegen eine Gegenfläche gepresst wird und so nach einem kurzen Augenblick eine Synchronisierung des Spindelhauptkörpers und des Stellorgans bewirkt.

Von Vorteil ist jedoch eine Gestaltung, die auf die Herstellung einer formschlüssigen Kopplung gerichtet ist. Hierfür ist es bei Verwendung der ersten Alternative mit mindestens einem Stopperbauteil insbesondere von Vorteil, wenn an einer Gegenfläche am Stellorgan oder am Spindelhauptkörper korrespondierend zum Stopperbauteil mindestens eine in Umfangsrichtung begrenzte Ausnehmung vorgesehen ist, in die das Stopperbauteil in dessen zweiter Position einrücken kann. Die Gegenfläche bietet demnach Ausnehmungen, die hinsichtlich ihrer Positionierung, insbesondere hinsichtlich ihrer Beabstandung von der Spindelhauptachse, an das eine Stopperbauteil oder die mehreren Stopperbauteile angepasst sind. Nach Verlagerung der Eingriffsbauteile der Riemenscheibe zueinander gelangen die vorzugsweise durch die zweite Federeinrichtung aus der Riemenscheibe herausgedrückten Stopperbauteile in diese Ausnehmungen hinein und bewirken somit schlagartig eine Synchronisierung des Stellorgans mit dem Spindelhauptkörper. Aufgrund der üblicherweise geringen Drehrelativgeschwindigkeiten ist diese schlagartige Herstellung der Synchronisierung für die Stopperbauteile unkritisch. Bei der Verwendung der zweiten Alternative mit einem axial verlagerbaren Eingriffsabschnitt wird vorzugsweise mittels der axialen Verlagerung eines der Eingriffsbauteile ein formschlüssige oder reibschlüssige Kopplung zwischen dem Spindelhauptkörper und dem Stellorgan bewirkt wird.

Von Vorteil ist es, wenn eine Mehrzahl von vorzugsweise unabhängig voneinander beweglichen und über den Umfang verteilten Stopperbauteile und/oder eine Mehrzahl von entsprechend verteilten Ausnehmungen vorgesehen sind, so dass der Spindelhauptkörper und das Stellorgan nach Verlagerung der Eingriffsbauteile zueinander maximal um 30°, vorzugsweise maximal um 15°, gegeneinander verdreht werden müssen, bis mindestens eines der Stopperbauteile in eine korrespondierende Ausnehmung einrücken kann.

Bei Verwendung eines axial verlagerbaren Eingriffsbauteils weist dieses zur Erzielung eines Formschlusses vorzugsweise eine stirnseitige Profilierung oder Verzahnung auf, zu der korrespondierend eine Profilierung oder Verzahnung an der Gegenfläche am Stellorgan oder am Spindelhauptkörper vorgesehen ist.

Bei einer Gestaltung einer Arbeitsspindel, die dafür vorgesehen ist, dass sowohl der Spindelhauptkörper als auch das Stellorgan über Riemengetriebe angetrieben werden, wird es als vorteilhaft angesehen, wenn eine erste Riemenscheibe oben beschriebener Art drehfest am Spindelhauptkörper vorgesehen ist, eine zweite Riemenscheibe oben beschriebener Art drehfest am Stellorgan vorgesehen ist und wenn weiterhin die Riemenscheiben in Axialrichtung benachbart zueinander ausgerichtet sind, so dass bei der ersten Alternative mindestens eines der Stopperbauteile einer der Riemenscheiben in seiner zweiten Position formschlüssig oder reibschlüssig mit der anderen Riemenscheibe in Kontakt gelangen kann bzw. bei der zweiten Alternative die Riemenscheiben mit aufeinander zu weisenden Profilierungen versehen sind, so dass mindestens ein Eingriffsabschnitt einer der Riemenscheiben in seiner zweiten Position formschlüssig mit der anderen Riemenscheibe in Eingriff gelangen kann.

Bei einer solchen Gestaltung erfüllt mindestens eine der Riemenscheiben neben ihrer Eignung, bei Wegfall des Riemens eine Relativverlagerung ihrer Eingriffsbauteile zu bewirken, auch den Zweck, die Gegenfläche für das mindestens eine Stopperbauteil bzw. das axial verlagerbare Eingriffsbauteil der anderen Riemenscheibe zu bilden. Insbesondere von Vorteil ist es, wenn die benachbarten Riemenscheiben so angeordnet sind, dass die jeweiligen Stopperbauteile oder Profilierungen bei einer Relativverlagerung ihrer jeweiligen Eingriffsbauteile jeweils in Richtung der anderen Riemenscheibe axial verlagert werden, so dass die Synchronisierung des Spindelhauptkörpers mit dem Stellorgan im Falle des Versagens eines Riemens unabhängig davon, welcher Riemen versagt, zwischen den beiden Riemenscheiben stattfindet. Hierdurch wird erreicht, dass anderweitige Bauteile der Arbeitsspindel nicht gezielt im Hinblick auf ihr Zusammenwirken mit einer erfindungsgemäßen Riemenscheibe ausgebildet sein müssen.

Die Erfindung betrifft weiterhin auch eine Werkstück- oder Werkzeughaltevorrichtung einer Werkzeugmaschine mit einem ortsfesten Gestell und einer Arbeitsspindel, wobei die Arbeitsspindel nach oben beschriebener Art ausgebildet ist und wobei weiterhin sowohl der Spindelhauptkörper der Arbeitsspindel als auch das Stellorgan koaxial zueinander drehbar gegenüber dem Gestell gelagert sind.

### Kurzbeschreibung der Zeichnungen

Weitere Aspekte und Vorteile der Erfindung ergeben sich außer aus den Ansprüchen auch aus der nachfolgenden Beschreibung bevorzugter Ausführungsbeispiele der Erfindung, die nachfolgend anhand der Figuren erläutert werden. Dabei zeigen:
- Fig. 1 a bis 1 c: eine erfindungsgemäße Riemenscheibe eines ersten Typs sowie eine insbesondere an einem Spindelhauptkörper vorzusehene Gegenfläche zum Zusammenwirken mit der Riemenscheibe,
- Fig. 2a bis 2c: eine erfindungsgemäße Arbeitsspindel, an der zwei erfindungsgemäße Riemenscheiben des ersten Typs Verwendung finden sowie die Riemenscheiben in separaten Darstellungen,
- Fig. 3a und 3c: eine erfindungsgemäße Riemenscheibe eines zweiten Typs,
- Fig. 4a und 4b: eine erfindungsgemäße Riemenscheibe eines dritten Typs,
- Fig. 5a und 5b: eine erfindungsgemäße Riemenscheibe eines vierten Typs und
- Fig. 6a und 6b: eine erfindungsgemäße Riemenscheibe eines vierten Typs.

### Detaillierte Beschreibung der Ausführungsbeispiele

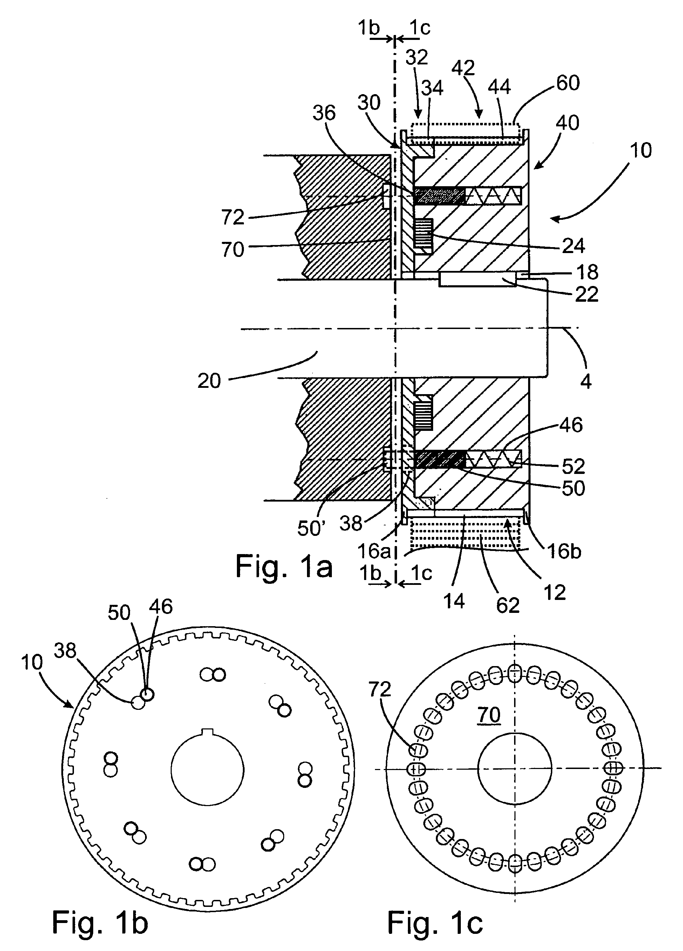

Die Fig. 1a bis 1c zeigen ein erstes Ausführungsbeispiel der Erfindung. Dabei ist die Riemenscheibe in Fig. 1 a in einer Querebene geschnitten dargestellt. Fig. 1 bund 1 c zeigen entsprechend der Pfeile in der Fig. 1 a die Stirnseite der Riemenscheibe sowie eine mit der Riemenscheibe zusammenwirkende Gegenfläche.

Die Riemenscheibe 10 ist als Zahnriemenscheibe ausgebildet. Sie weist daher in einem Eingriffsbereich 12 an ihrem Außenumfang eine umlaufende Stirnverzahnung 14 auf, die beidseitig durch umlaufende Stege 16a, 16b begrenzt wird. Zur drehfesten Festlegung der Riemenscheibe 10 auf einer Welle 20 ist in an sich bekannter Weise an dem Innenumfang der Riemenscheibe eine Nut 18 vorgesehen, in die eine Feder 22 eingeschoben ist.

Die dargestellte Riemenscheibe 10 weist ein erstes und ein zweites Eingriffsbauteile 30, 40 auf. Beide Eingriffsbauteile 30, 40 bilden mit Eingriffsteilbereichen 32, 42 jeweils einen Teil des Eingriffsbereichs 12, wobei das zweite Eingriffsbauteil 40 als Haupteingriffsbauteil mindestens 75% der Eingriffsfläche bildet. Beide Teileingriffsbereiche 32, 42 weisen jeweils Teile 34, 44 der beschriebenen Verzahnung 14 auf.

Die Eingriffsbauteile 30, 40 sind gegeneinander um die Rotationsachse 4 der Riemenscheibe 10 zumindest begrenzt drehbeweglich, wobei über nicht näher dargestellte Kopplungsmechanismen bewirkt sein kann, dass diese Drehbeweglichkeit um die Rotationsachse 4 die einzige Relativbeweglichkeit der Eingriffsbauteil 30, 40 gegeneinander ist. Die Relativbeweglichkeit um die Rotationsachse 4 ist vorzugsweise nur über einen begrenzten Drehwinkel von beispielsweise 30° gegeben und kann insbesondere beidseitig durch Anschläge begrenzt sein. Zwischen den Eingriffsbauteilen 30, 40 ist eine erste Federeinrichtung 24 vorgesehen, die als an beiden Eingriffsbauteilen 30, 40 abgestützte Spiralfeder ausgebildet ist und die die Eingriffsbauteile 30, 40 gegeneinander momentenbeaufschlagt.

Innerhalb des zweiten Eingriffsbauteils 40 sind axial erstreckte Aufnahmeschächte 46 angeordnet, in die Stopperstifte 50 eingesetzt sind. Diese Stopperstifte 50 sind innerhalb der Aufnahmeschächte 46 in axialer Richtung beweglich und werden durch zweite Federeinrichtungen 52 permanent in Richtung des ersten Eingriffsbauteils 30 kraftbeaufschlagt.

Eine erste Relativstellung der beiden Eingriffsbauteile 30, 40 liegt vor, wenn die Riemenscheibe sich in einem ordnungsgemäßen Betriebszustand befindet, in dem sie im Eingriff mit einem in Fig. 1 a gepunktet dargestellten gespannten Zahnriemen 60 steht. In dieser ersten Relativstellung der Eingriffsbauteile 30, 40 zueinander liegen die Stopperstifte 50 kraftbeaufschlagt durch die zweiten Federmittel 52 an einer zum zweiten Eingriffsbauteil 40 gewandten Sicherungsfläche 36 des ersten Eingriffsbauteils 30 an.

Das erste Federmittel 24 bewirkt in dieser ersten Relativstellung ein permanentes Federmoment, das darauf gerichtet ist, die Eingriffsbauteile 30, 40 aus der in Fig. 1 a und 1b dargestellten ersten Relativlage in eine zweite Relativlage zu drücken, in der Ausnehmungen 38 am ersten Eingriffsbauteil mit den Aufnahmeschächten 46 am zweiten Eingriffsbauteil 40 fluchten, so dass die Stopperstifte 50 durch diese Ausnehmungen 38 hindurch nach außen gedrückt werden können. Dieses Federmoment des Federmittels 24 kann jedoch solange keine Wirkung entfalten, solange der die Verzahnung 62 des Zahnriemens 60 in Eingriff mit beiden Teilverzahnungen 34, 44 der Riemenscheibe 10 steht.

Wenn es im Betrieb der Riemenscheibe 10 zu einem Reißen des Riemens 60 kommt, wird diese Sicherung der Eingriffsbauteile 30, 40 zueinander aufgehoben, so dass unter der Wirkung der ersten Federmittel 24 eine Relativverdrehung der Eingriffsbauteile 30, 40 in eine zweite Relativlage stattfindet. Bezogen auf die Darstellung der Fig. 1b wird das erste Eingriffsbauteil 30 um Uhrzeigersinn gegenüber dem zweiten Eingriffsbauteil 40 verlagert, so dass die Ausnehmungen 38 am ersten Eingriffsbauteil 30 in Folge dessen mit den Aufnahmeschächten 46 am zweiten Eingriffsbauteil 40 und den darin eingesetzten Stopperstiften 50 fluchten. Der Wegfall der Sicherung der Stopperstifte 50 bewirkt, dass die Stopperstifte 50 mittels der zweiten Federmittel 52 durch die Ausnehmungen 38 hindurch herausgedrückt werden. Sie gelangen hierdurch in der in Fig. 1 a für einen der Stopperstifte 50 gestrichelt dargestellten Weise in Ausnehmungen 72 in einer Gegenfläche 70, gegenüber der die Riemenscheibe 10 drehbar gelagert ist. Wie sich aus der Darstellung der Fig. 1c ergibt, sind eine Vielzahl von Ausnehmungen 72 in der Gegenfläche 70 vorgesehen, so dass die Stopperbauteile 50 nach einer Relativverdrehung des zweiten Eingriffsbauteils 40 gegenüber der Gegenfläche 70 von maximal etwa 12° in eine Vertiefung 72 einrasten können und somit ein Stillstand des zweiten Eingriffsbauteils 40 und somit der Welle 20 gegenüber der Gegenfläche 70 bewirken. Hierdurch ist ein gesicherter Zustand erreichbar, der nachfolgend im Zuge der Montage eines neuen Riemens wieder aufgehoben werden kann, indem die Stopperstifte 50 zurück in die Aufnahmeschächte 46 gedrückt werden und das erste Eingriffsbauteil 30 wieder in seine erste Relativstellung relativ zum zweiten Eingriffsbauteil 40 verlagert wird, bevor ein neuer Zahnriemen 60 montiert wird.

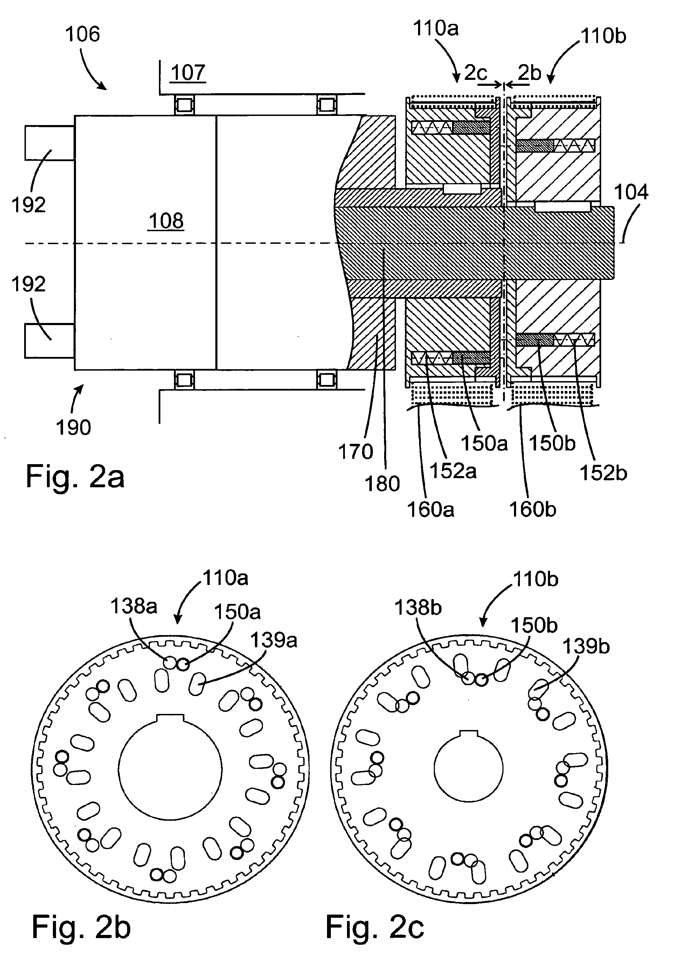

Die Fig. 2a bis 2c zeigt weitgehend schematisch eine zweite Ausführungsform der Erfindung in Form einer weitgehend schematisch dargestellten Werkstückhaltevorrichtung 106 mit einer Arbeitsspindel 108, die über zwei erfindungsgemäße Riemenscheiben 110a, 110b verfügt. Die Werkstückhaltevorrichtung 106 verfügt über ein Gestell 107, gegenüber dem die Arbeitsspindel 108 um die Rotationsachse 104 drehbar gelagert ist.

Von den an der Arbeitsspindel 108 vorgesehenen Riemenscheiben 110a, 110b ist die linke Riemenscheibe 110a drehfest mit einem Spindelhauptkörper 170 verbunden, während die zweite Riemenscheibe 110b mit einer innerhalb des Spindelhauptkörpers 170 angeordneten und gegenüber dem Spindelhauptkörper 170 um die Rotationsachse 104 drehbar gelagerten Spannstange 180 drehfest verbunden ist. Am linksseitigen Ende der Arbeitsspindel 170 ist eine Spanneinrichtung 190 vorgesehen, die in nicht näher dargestellter Weise durch eine Relativverdrehung der Spannstange 180 gegenüber dem Spindelhauptkörper 170 hinsichtlich der Radialstellung ihrer Spannbacken 192 verstellbar ist.

Im Betrieb der Arbeitsspindel ist es von großer Relevanz, dass beim Versagen eines der beiden Zahnriemen 160a, 160b gewährleistet bleibt, dass es zu keiner großen Relativverdrehung der Spannstange 180 gegenüber dem Spindelhauptkörper 170 kommt, da hierdurch ― gegebenenfalls bei hohen Drehzahlen ― eine unkontrollierte Trennung des Werkstücks von der Spanneinrichtung 190 erfolgen könnte. Dies wird erfindungsgemäß über die Riemenscheiben 110a, 110b gewährleistet, die jeweils im Wesentlichen derart ausgestaltet sind, wie die Riemenscheibe der Fig. 1 a und 1 b. Sie verfügen dementsprechend jeweils auch über eine in der Fig. 2a nicht dargestellte erste Federeinrichtung, die zwischen den beiden Eingriffsbauteilen eingespannt ist.

Die Besonderheit bei der Gestaltung der Fig. 2a bis 2c liegt insbesondere darin, dass die Riemenscheiben 110a, 110b jeweils Stopperbauteile 150a, 150b aufweisen, die durch ihre jeweils zugeordneten zweiten Federeinrichtungen 152a, 152b in Richtung der anderen Riemenscheibe 110b, 110a kraftbeaufschlagt werden. Ein Versagen eines der Riemen 160a, 160b führt daher dazu, dass die Stopperstifte 150a, 150b nach Relativverlagerung der Eingriffsbauteile der jeweils betroffenen Riemenscheibe 110b, 110a gegen die andere der Riemenscheiben 110b, 110a gepresst werden. Wie anhand der Fig. 2b und 2c zu erkennen ist, weisen beide Riemenscheiben 110a, 110b neben den Ausnehmungen 138a, 138b zur Freigabe der jeweils eigenen Stopperstifte 150a, 150b auch Ausnehmungen 139a, 139b auf, die hinsichtlich ihrer Funktion den Ausnehmungen 72 des Ausführungsbeispiels der Fig. 1a bis 1c entsprechen und der formschlüssigen Sicherung der Stopperstifte 150b, 150a der jeweils anderen Riemenscheibe 110b, 110a dienen.

Sobald einer der Riemen 160a, 160b versagt, kommt es somit zu einer Relativverlagerung der jeweiligen Eingriffsbauteile der zugeordneten Riemenscheibe 110a, 110b und in Reaktion hierauf zu einer Verlagerung der Stopperstifte 150a oder 150b, die zu einer unmittelbaren Synchronisierung der beiden Riemenscheiben 110a, 110b führt, wodurch eine Relativdrehverlagerung der Riemenscheiben 110a, 110b gegeneinander verhindert wird. Dies gewährleistet, dass auch ein Öffnen der Spanneinrichtung 190 nicht eintritt und dass die Arbeitsspindel 108 mit dem Werkstück somit kontrolliert abgebremst werden kann, um anschließend einen neuen Riemen zu montieren.

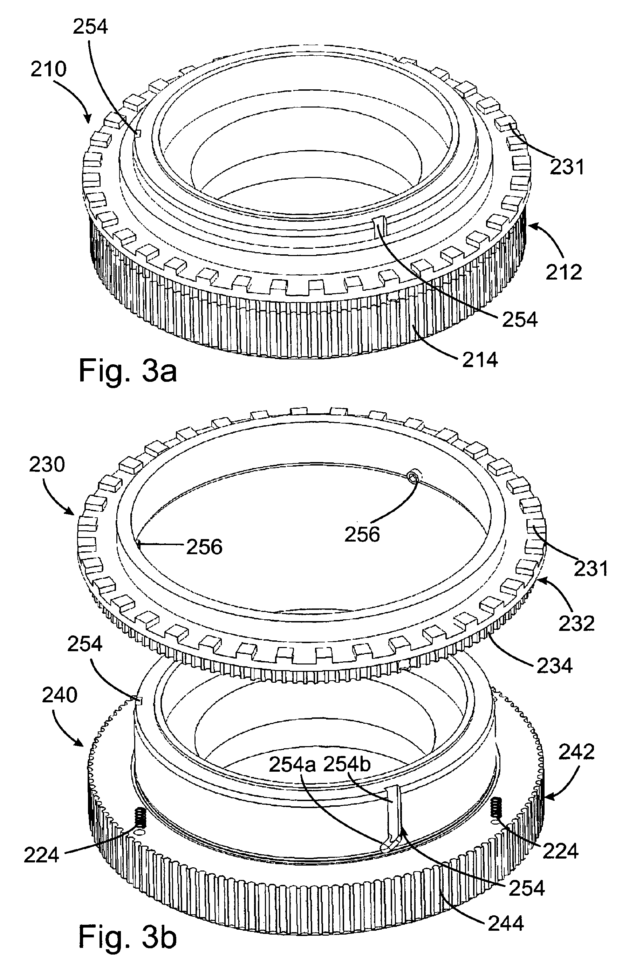

Die Figuren 3a und 3b zeigen eine weitere Ausführungsform einer erfindungsgemäßen Riemenscheibe 210. Übereinstimmend mit den bereits beschriebenen Riemenscheiben weist diese Riemenscheibe 210 einen mit einer Verzahnung 214 ausgebildeten Eingriffsbereich 212 auf, der zur Kraftübertragung mit einem nicht dargestellten Zahnriemen vorgesehen ist. Auch die Riemenscheibe 210 besteht aus zwei Eingriffsbauteilen 230, 240, die jeweils einen Teilbereich 232, 242 des Eingriffsbereichs 212 bilden, wobei in beiden Teilbereichen 232, 242 Teilabschnitte 234, 244 der genannten Verzahnung vorgesehen sind.

Auch die Eingriffsbauteile 230, 240 der Riemenscheibe 210 sind gegeneinander beweglich. Abweichend von den bisher beschriebenen Ausführungsbeispielen handelt es sich dabei jedoch nicht um eine rein rotative Relativbeweglichkeit. Aus Figur 3b ergibt sich, dass am Eingriffsbauteil 240 insgesamt drei Kulissenausnehmungen 254 vorgesehen sind. Diese dienen der Aufnahme von als Kulissengleitern agierenden Schraubköpfen 256, die am anderen Eingriffsbauteil 230 vorgesehen sind. Die Kulissenausnehmungen 254 weisen übereinstimmend einen ersten Abschnitt 254a, der sich schräg in Umfangsrichtung und Axialrichtung erstreckt. Hieran schließt sich ein zweiter Abschnitt 254b an, der sich ausschließlich in Axialrichtung erstreckt und in einem Zugang zur Kulissenausnehmung mündet. Im zusammengesetzten Zustand, der in Figur 3a dargestellt ist, befinden sich die Kulissengleiter 256 am distalen Ende des Abschnitts 254a. Die beiden Eingriffsbauteile 230, 240 sind in Axialrichtung permanent gegeneinander kraftbeaufschlagt. Hierfür sind Schraubenfedern 224 vorgesehen, die die beiden Eingriffsbauteile 230, 240 permanent voneinander weg kraftbeaufschlagen.

Die Funktionsweise der Riemenscheibe 210 wird nachfolgend beschrieben. In einem ordnungsgemäßen Betriebszustand befindet sich die Riemenscheibe 210 im Zustand der Figur 3a. Die Eingriffsbauteile 230, 240 werden zwar durch die Federn 224 voneinander weggedrückt, so dass aufgrund der Formgebung der Kulissenausnehmung 254 die Eingriffsbauteile 230, 240 rotativ und translativ gegeneinander momenten- bzw. kraftbeaufschlagt werden. Solange ein Zahnriemen im Eingriff mit sowohl dem Teilbereich 232 als auch dem Teilbereich 242 der Verzahnung 214 ist, kann eine Relativbewegung der Eingriffsbauteile 230, 240 jedoch nicht stattfinden. Der Zahnriemen behindert die rotative Relativbeweglichkeit, so dass aufgrund der Zwangskoppelung über den Abschnitt 254a der Kulissenausnehmung 254 auch eine axiale Relativbewegung nicht möglich ist.

Erst wenn es zu einem Versagen des nicht dargestellten Riemens kommt, können die Eingriffsbauteile 230, 240 gegeneinander verdreht werden. Unter der Wirkung der Federn 224 und der Ausrichtung des Abschnitts 254a der Kulissenführung 254 geschieht dies bei gleichzeitiger axialer Beabstandung des Eingriffsbauteils 230 vom Eingriffsbauteil 240.

Diese Relativbewegung kann genutzt werden, indem das Eingriffsbauteil 230 mit einer hieran vorgesehenen stirnseitigen Profilierung 231 in Eingriff mit einem Gegenbauteil gelangt, zu dem es durch diesen Eingriff synchronisiert wird. So kann die dargestellte Riemenscheibe in ähnlicher Anordnung wie in Figur 1a dargestellt Verwendung finden. Ihr Eingriffsabschnitt 240 würde dann drehfest mit dem Stellorgan 20 verbunden sein und die Profilierung 231 würde im Versagensfall des Riemens eine drehfeste Verbindung mit dem Spindelhauptkörper 70 eingehen.

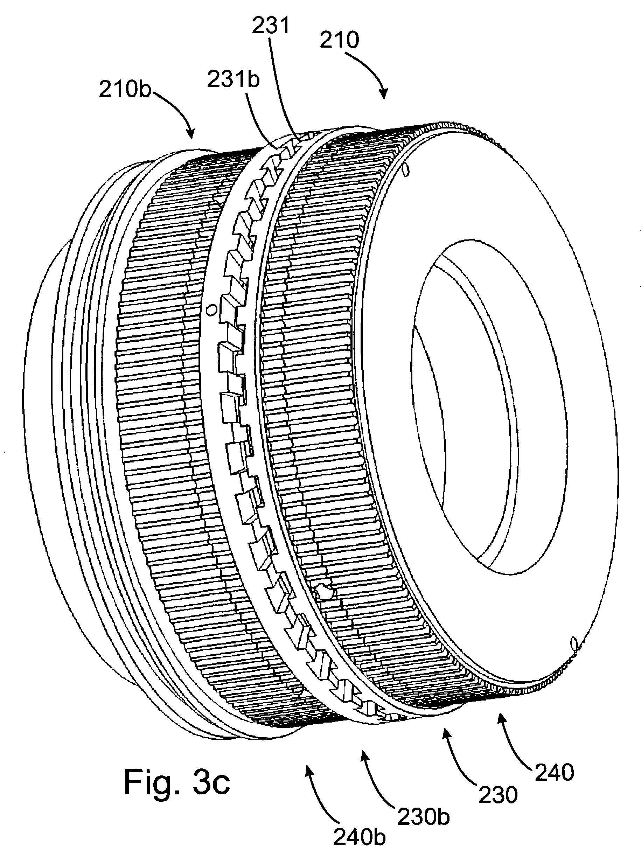

Wie Figur 3c zeigt, ist jedoch auch eine Anordnung entsprechend der Figur 2a möglich. Hierbei finden zwei Riemenscheiben 210, 210b Anwendung, die jeweils in der Art, wie in Figur 3a und 3b dargestellt, aufgebaut sind. Ihre axial verlagerbaren Eingriffsbauteile 230, 230b weisen aufeinander zu, sind jedoch während eines ordnungsgemäßen Betriebszustandes mit ihren Profilierungen 231, 231 b nicht im Eingriff miteinander. Sobald einer der beiden zu verwendenden Zahnriemen versagt, wird das Eingriffsbauteil 230 bzw. 230b der zugeordneten Riemenscheibe 210, 210b in Richtung der anderen Riemenscheibe 210b, 210 axial verlagert, so dass die Profilierungen 231, 231 b in Eingriff miteinander kommen und eine Synchronisierung beider Riemenscheiben 210, 210b erzwingen.

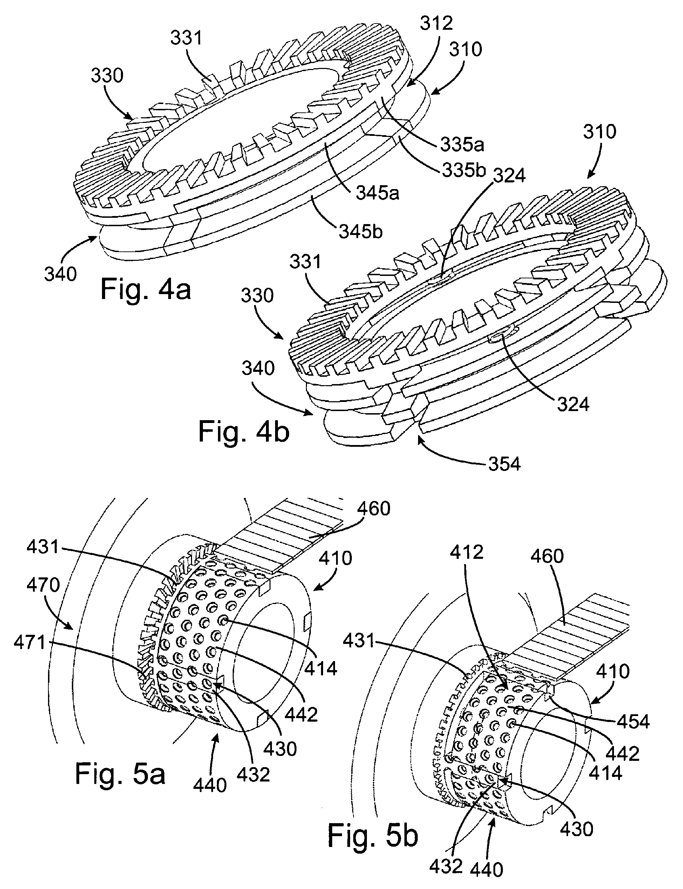

Die Ausgestaltung der Figuren 4a und 4b ist hinsichtlich des Grundaufbaus mit der Ausgestaltung der Figuren 3a bis 3c vergleichbar. Auch die Riemenscheibe 310 umfasst zwei Eingriffsbauteile 230, 240, die gegeneinander axial verlagerbar sind und mittels Federn 324 voneinander weggedrückt werden. Ebenfalls umfasst auch das axial verlagerbare Eingriffsbauteil 330 eine stirnseitige Profilierung 331 zur Herstellung einer Synchronisation oder einer Bremswirkung. Die Riemenscheibe 310 ist allerdings als Keilriemenscheibe ausgebildet. Der Eingriffsbereich 312 ist daher als Vertiefung ausgebildet, die beidseitig durch umlaufende Stege 335a, 345a, 335b, 345b begrenzt wird. Die Stege werden dabei gemeinsam durch die beiden Eingriffsbauteile 330, 340 gebildet. Insbesondere wird der zum Eingriffsbauteil 330 hinweisende Steg 335a, 345a zum Teil durch einen Stegabschnitt 345a des Eingriffsbauteils 340 gebildet und der dem Eingriffsbauteil 330 abgewandte Steg 345b, 335b wird teilweise durch Stegabschnitte 335b des Eingriffsbauteils 330 gebildet. Diese Art der Verschränkung führt dazu, dass bei Vorhandensein eines Keilriemens innerhalb der Vertiefung 312 die Eingriffsbauteile 330, 340 nicht gegeneinander in Axialrichtung verlagert werden können.

Erst wenn durch ein Versagen des Keilriemens dieser aus der Vertiefung 312 entweicht, kann es zur in Figur 4b verdeutlichten Verlagerung der Eingriffsbauteile 330, 340 zueinander kommen, so dass in Reaktion die Profilierung 331 am Eingriffsbauteil 330 die gewünschte Brems- oder Synchronisationswirkung bewirken kann. Analog der Fig. 3c, kann die Riemenscheibe 310 mit einer in etwa baugleichen zweiten kombiniert werden, um beim Versagen eines von zwei Riemen einer Synchronisierung zu bewirken.

Die Ausgestaltung gemäß der Figuren 5a und 5b weist einige Verwandtschaft zur Ausgestaltung der Figuren 4a und 4b auf. Wiederum sind die beiden Eingriffsbauteile 430, 440 der Riemenscheibe 410 lediglich axial gegeneinander verlagerbar. Weiterhin ist wiederum eine Profilierung 431 vorgesehen, die im Versagensfalle des Riemens 460 zum Zwecke des Eingriffs mit einem Gegenbauteil 470 und dessen Profilierung 471 mit einer Profilierung 431 versehen ist. Abweichend von der Ausgestaltung der Figuren 4a und 4b sind der Eingriffsbereich 412 sowie dessen Teilbereiche 432, 442 an den Eingriffsbauteilen 430, 440 mit Noppenvertiefungen 414 zur formschlüssigen Wechselwirkung mit dem als Noppenriemen ausgebildeten Riemen 460 ausgebildet. Die axiale Verlagerung der Eingriffsbauteile 430, 440 gegeneinander wird also abweichend von der Ausgestaltung der Figuren 4a und 4b in einem ordnungsgemäßen Betriebszustand mit vorhandenem Riemen nicht durch seitliche Stege unterbunden, sondern dadurch, dass Noppen des Riemens 460 in die auf die Teilbereiche 432, 442 verteilten Vertiefungen 414 eingreifen.

Sobald der Riemen versagt, ist die axiale Verlagerbarkeit nicht mehr unterbunden und es stellt sich der Zustand der Figur 5b ein, in dem die Profilierung 431 in bremsenden oder synchronisierenden Eingriff mit der Profilierung 471 des Gegenbauteils 470 gelangt.

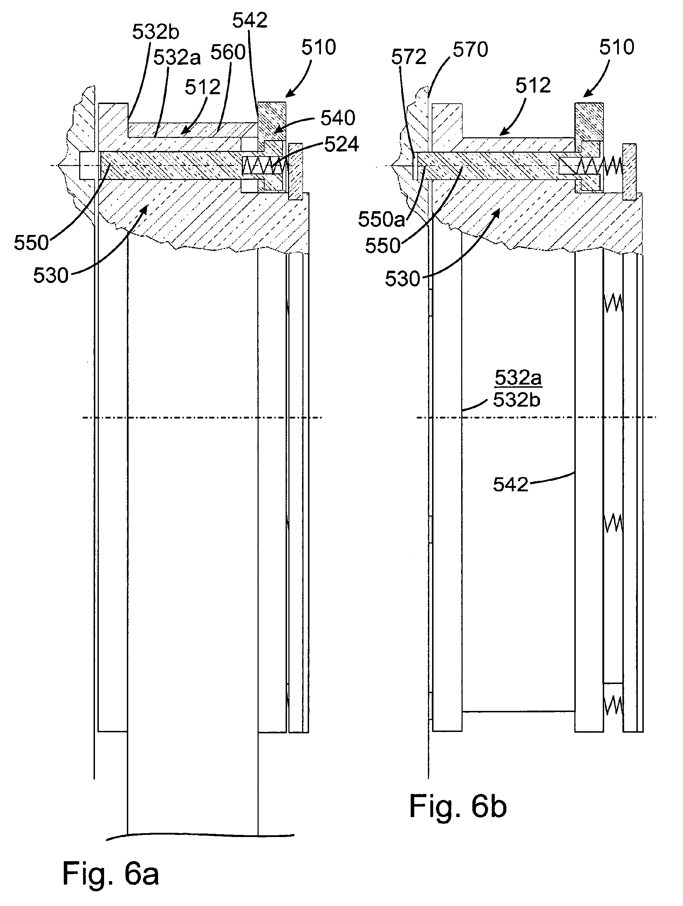

Figuren 6a und 6b zeigen eine weitere Ausführungsform einer erfindungsgemäßen Riemenscheibe 510. Auch diese besteht aus zwei Eingriffsbauteilen 530, 540, die gemeinsam einen Eingriffsbereich 512 der Riemenscheibe bilden. Die Besonderheit liegt diesbezüglich bei dieser Ausgestaltung darin, dass der überwiegende Teil des Eingriffsbereichs 512, nämlich die gesamte zylindrische Lauffläche 532a sowie die Innenseite 532b eines die zylindrische Lauffläche 532a einseitig begrenzenden Steges, durch das erste Eingriffsbauteil 530 gebildet wird. Das zweite Eingriffsbauteil 540 ist im Wesentlichen als Bordscheibe ausgebildet und bildet als solche lediglich eine der Innenseite 532b des ersten Eingriffsbauteils 530 gegenüberliegende zweiten Innenseite 542 des Eingriffsbereichs 512. An der das zweite Eingriffsbauteil bildenden Bordscheibe 540 sind über den Umfang verteilt sechs Stopperstifte 550 vorgesehen, die in Schächten des ersten Eingriffsbauteils 530 ruhen und die gemeinsam mit der Bordscheibe 540 mittels sich am Eingriffsbauteil 530 abstützender Federn 524 bezogen auf die Figuren 6a und 6b nach rechts kraftbeaufschlagt werden.

Im Funktionszustand der Figur 6a liegt ein einfacher Flachriemen 560 im Eingriffsbereich 512 der Riemenscheibe 510. Aufgrund seiner Breite verhindert der Flachriemen 560, dass die Bordscheibe 540 gemeinsam mit den Stopperstiften 550 unter dem Eindruck der Federn 524 nach rechts gedrückt wird.

Sobald jedoch der Riemen versagt und dadurch den Eingriffsbereich 512 verlässt, kann die Bordscheibe 540 zusammen mit den Stopperstiften 550 in Richtung der gegenüberliegenden Innenseite 532b verlagert werden. Hierdurch werden die axialen Enden 550a in an einer Gegenfläche 570 vorgesehene Ausnehmungen 572 hineingedrückt, so dass es zu einer Synchronisierung zwischen der Riemenscheibe 510 und der Gegenfläche 570 kommt. Im Falle einer stillstehenden Gegenfläche 570 wird somit eine Bremswirkung erzielt. Die Gegenfläche 570 kann jedoch wie bei den vorangegangenen Ausführungsformen bereits beschrieben auch Teil eines drehbeweglichen Bauteils sein, zu dem durch das Herausfahren der Stopperstifte 550 somit eine Synchronisierung erzielt wird.

## Patentansprüche

1. Set aus einer Riemenscheibe (10; 110a, 110b; 210; 310; 410; 510) und einem Riemen (60; 160a, 160b; 460; 560),
wobei die Riemenscheibe einen sich über den Außenumfang erstreckenden Eingriffsbereich (12; 212; 312; 412; 512) zur Kraftübertragung von der Riemenscheibe (10; 110a, 110b; 210; 310; 410; 510) auf einen Riemen (60; 160a, 160b; 460; 560) oder von einem Riemen (60; 160a, 160b; 460; 560) auf die Riemenscheibe (10; 110a, 110b; 210; 310; 410; 510) aufweist, wobei die Riemenscheibe (10; 110a, 110b; 210; 310; 410; 510) mindestens zwei separate und gegeneinander zwischen einer ersten Relativlage und einer zweiten Relativlage bezüglich eines Freiheitsgrades (4; 104) bewegliche Eingriffsbauteile (30, 40; 230, 240; 330, 340; 430, 440; 530, 540) aufweist, wobei
- beide Eingriffsbauteile (30, 40; 230, 240; 330, 340; 430, 440; 530, 540) jeweils einen Teileingriffsbereich (32, 42; 232, 242, 432, 442; 532a, 532b, 542) des sich über den Außenumfang erstreckenden Eingriffsbereichs (12; 212; 312; 412; 512) der Riemenscheibe bilden und
- die beiden Teileingriffsbereichen (32, 42; 232, 242, 432, 442; 532a, 532b, 542) Formgebungen, insbesondere mit Vertiefungen (34, 44; 234, 244; 314; 414),aufweisen, die gemeinsam dazu geeignet sind bei Eingriff eines an die Formgebungen, insbesondere die Vertiefungen, angepassten Riemens (60; 160a, 160b; 460) eine Relativverlagerung der Eingriffsbauteile (30, 40; 230, 240; 330, 340; 430, 440; 530, 540) hinsichtlich des Freiheitsgrades (4; 104) zu verhindern,
- der Riemen (60; 160a, 160b; 460; 560) derart ausgebildet ist, dass bei Vorliegen eines Eingriffs des Riemens (60; 160a, 160b; 460; 560) in die Riemenscheibe (10; 110a, 110b; 210; 310, 410; 510) eine Relativverlagerung der Eingriffsbauteile (30, 40; 230, 240; 330, 340; 430, 440; 540) hinsichtlich des Freiheitsgrades (4; 104) verhindert wird,
**dadurch gekennzeichnet, dass**
- mindestens ein Stopperbauteil (50; 150a, 150b; 550) vorgesehen ist, welches
- bei Vorliegen der ersten Relativlage der Eingriffbauteile (30, 40; 530, 540) zueinander in einer ersten Position gesichert ist, in der es vollständig innerhalb eines durch die Eingriffsbauteile (30, 40; 530, 540) definierten Innenraum (46) angeordnet ist, und
- bei Vorliegen der zweiten Relativlage der Eingriffsbauteile (30, 40) zueinander eine zweite Position einnehmen kann oder durch die Verlagerung der Eingriffsbauteile (530, 540) in die zweite Relativlage eine zweite Position einnimmt, in der es zumindest abschnittsweise aus dem Innenraum (46) nach außen ragt,
- und/oder der Freiheitsgrad zumindest auch eine Beweglichkeit der Eingriffsbauteile in einer Axialrichtung ermöglicht, wobei eine erste Federeinrichtung (224; 324; 424; 524) zwischen den Eingriffbauteilen (230, 240; 330, 340; 430, 440; 530, 540) angeordnet ist, durch die die Eingriffbauteile (230, 240; 330, 340; 430, 440) aus ihrer ersten Relativlage in Richtung ihrer zweiten Relativlage in Axialrichtung kraftbeaufschlagt sin

2. Set nach Anspruch 1,
**dadurch gekennzeichnet, dass**
die Riemenscheibe (10; 110a, 110b; 210) als Zahnriemenscheibe (10; 110a, 110b; 210) ausgebildet ist, wobei die die Teileingriffsbereiche (32, 42; 232, 242) beider Eingriffsbauteile (30, 40; 230; 240) Verzahnungen (34, 44; 234, 244) aufweisen, deren Zähne zumindest zum Teil in der ersten Relativlage miteinander fluchten.

3. Set nach Anspruch 1 oder 2,
**dadurch gekennzeichnet, dass**
der Freiheitsgrad eine rotative Beweglichkeit um die Drehachse (4; 104) der Riemenscheibe (10; 110a, 110b; 210) umfasst, wobei vorzugsweise die Teileingriffsbereiche (32, 42; 232, 242) beider Eingriffsbauteile (30, 40; 230, 240) sich jeweils über den Gesamtumfang der Riemenscheibe (10; 110a, 110b; 210) erstrecken.

4. Set nach einem der vorstehenden Ansprüche,
**dadurch gekennzeichnet, dass**
zwischen den Eingriffsbauteilen (30, 40; 130, 140; 230, 240; 330, 340; 430, 440; 530, 540) eine erste Federeinrichtung (24; 224; 324, 524) vorgesehen ist, mittels derer die Eingriffsbauteile (30, 40; 130, 140; 230, 240; 330, 340; 430, 440; 530, 540) gegeneinander derart verspannbar sind, dass sie bei Vorliegen der ersten Relativlage in Richtung der zweiten Relativlage federkraftbeaufschlagt sind.

5. Set nach einem der vorstehenden Ansprüche,
**dadurch gekennzeichnet, dass**
die Sicherung des Stopperbauteils (50; 150a, 150b) in der ersten Relativlage durch einen an einem der Eingriffsbauteile vorgesehenen Sicherungsabschnitt (36) erfolgt und die Freigabe des Stopperbauteils (50; 150a, 150b) in der zweiten Relativlage durch eine an einem der Eingriffsbauteile (30) vorgesehene Ausnehmung (38; 138a, 138b) ermöglicht wird.

6. Set nach einem der vorstehenden Ansprüche,
**dadurch gekennzeichnet, dass**
eine zweite Federeinrichtung (52; 152a, 152b) vorgesehen ist, mittels derer das Stopperbauteil (50; 150a, 150b) in Richtung seiner zweiten Position federkraftbeaufschlagt ist, während es in seiner ersten Position gesichert ist.

7. Set nach einem der vorstehenden Ansprüche,
**dadurch gekennzeichnet, dass**
die Eingriffsbauteile (330, 340; 430, 440; 530, 540) ausschließlich in einer Axialrichtung gegeneinander beweglich sind.

8. Set nach einem der Ansprüche 1 bis 6,
**dadurch gekennzeichnet, dass**
die Eingriffsbauteile (230, 240) ausgehend von der ersten Relativlage zumindest in einer ersten Teilphase ihrer Relativbewegung in einer überlagerten axialen und rotativen Richtung gegeneinander beweglich sind.

9. Set nach Anspruch 8,
**dadurch gekennzeichnet, dass**
die Eingriffsbauteile (230, 240) in einer auf die erste Teilphase folgende zweite Teilphase der Relativbewegungen ausschließlich in Axialrichtung gegeneinander beweglich sind.

10. Set nach einem der vorstehenden Ansprüche,
**gekennzeichnet durch**
mindestens eine Kulissenführung (254, 256; 354; 454), mittels derer die Relativbeweglichkeit der Eingriffsbauteile (230, 240; 330, 340; 430, 440) gegeneinander definiert ist.

11. Arbeitsspindel für eine Werkzeugmaschine mit
- einem Spindelhauptkörper (70; 170; 470; 570),
- einer am Spindelhauptkörper (70; 170; 470; 570) vorgesehenen verstellbare Spanneinrichtung (190) zur Aufnahme eines Werkstücks oder Werkzeugs und
- einem um eine Spindelhauptachse (104) gegenüber dem Spindelhauptkörper (70; 170; 470; 570) drehbar gelagerten Stellorgan (20; 180),
wobei
- die Spanneinrichtung (190) derart ausgebildet ist, dass sie durch eine Relativbewegung des Stellorgans (20; 180) gegenüber dem Spindelhauptkörper (70; 170; 470; 570) verstellbar ist,
**dadurch gekennzeichnet, dass**
drehfest zum Spindelhauptkörper (70; 170; 470; 570) und/oder drehfest zum Stellorgan (180) eine Riemenscheibe (10; 110a, 110b; 210; 310; 410; 510) eines Sets nach einem der Ansprüche 1 bis 10 vorgesehen ist, mit der ein Riemen des Sets nach einem der Ansprüche 1 bis 10 im Eingriff ist, wobei bei einer Relativverlagerung der Eingriffsbauteile (30, 40; 230, 240; 330, 340; 430, 440; 530, 540) zueinander aus der ersten Relativlage in die zweite Relativlage
- mittels des Stopperbauteils (50; 150a, 150b; 550) eine formschlüssige oder reibschlüssige Kopplung zwischen dem Spindelhauptkörper (70; 170; 570) und dem Stellorgan (20; 180) bewirkt wird oder
- mittels der axialen Verlagerung eines der Eingriffsbauteile (230; 330; 430; 530) ein formschlüssige oder reibschlüssige Kopplung zwischen dem Spindelhauptkörper (470; 570) und dem Stellorgan bewirkt wird.

12. Arbeitsspindel nach Anspruch 11,
**dadurch gekennzeichnet, dass** am Stellorgan (20; 180) oder am Spindelhauptkörper (70; 170; 470; 570) korrespondierend zum Stopperbauteil (50; 150a, 150b; 550) eine in Umfangsrichtung begrenzte Ausnehmung (72; 139a, 139b; 570) vorgesehen ist, in die das Stopperbauteil (50; 150a, 150b; 550) in dessen zweiter Position einrücken kann, oder korrespondierend zum verlagerten Eingriffsbauteil (230; 330; 430) eine Profilierung (471) vorgesehen ist

13. Arbeitsspindel nach Anspruch 11 oder 12,
**dadurch gekennzeichnet, dass**
- eine erste Riemenscheibe (110a; 210) drehfest am Spindelhauptkörper (170) vorgesehen ist und eine zweite Riemenscheibe (110b; 210b) drehfest am Stellorgan (180) vorgesehen ist, und
- die Riemenscheiben (110a, 110b) in Axialrichtung benachbart zueinander ausgerichtet sind, so dass mindestens eines der Stopperbauteile (150a, 150b) einer der Riemenscheiben (110a, 110b) in seiner zweiten Position formschlüssig oder reibschlüssig mit der anderen Riemenscheibe (110b, 110a) in Kontakt gelangen kann oder
- die Riemenscheiben (210, 210b) in Axialrichtung benachbart zueinander und mit aufeinander zu weisenden Profilierungen (231, 231 b) versehen sind, so dass mindestens ein Eingriffsabschnitt (230, 230b) einer der Riemenscheiben (210, 210b) in seiner zweiten Position formschlüssig mit der anderen Riemenscheibe (210b, 210) in Kontakt gelangen kann.

14. Werkstück- oder Werkzeughaltevorrichtung (106) einer Werkzeugmaschine mit
- einem ortsfesten Gestell (107) und
- einer Arbeitsspindel (108),
**dadurch gekennzeichnet, dass**
die Arbeitsspindel (108) nach einem der Ansprüche 11 bis 13 ausgebildet ist, wobei sowohl der Spindelhauptkörper (170) als auch das Stellorgan (180) koaxial drehbar gegenüber dem Gestell (107) gelagert sind.

## Claims

1. A set composed of a pulley (10; 110a, 110b; 210; 310; 410; 510) and a belt (60; 160a, 160b; 460; 560),
wherein the pulley has an engagement zone (12; 212; 312; 412; 512) extending over the outer periphery for power transmission from the pulley (10; 110a, 110b; 210; 310; 410; 510) to a belt (60; 160a, 160b; 460; 560), or from a belt (60; 160a, 160b; 460; 560) to a pulley (10; 110a, 110b; 210; 310; 410; 510), wherein the pulley (10; 110a, 110b; 210; 310; 410; 510) has at least two engagement components (30, 40; 230, 240; 330, 340; 430, 440; 530, 540) separate and free to move one relative to the other between a first relative position and a second relative position in relation to one degree of freedom (4; 104), wherein
- both the engagement components (30, 40; 230, 240; 330, 340; 430, 440; 530, 540) each form a partial engagement zone (32, 42; 232, 242, 432, 442; 532a, 532b, 542) of the engagement zone (12; 212; 312; 412; 512) of the pulley extending over the outer periphery, and
- both the partial engagement zones (32, 42; 232, 242, 432, 442; 532a, 532b, 542) include formations, in particular with recesses (34, 44; 234, 244; 314; 414), which together are capable to prevent, upon engagement of a belt (60; 160a, 160b; 460; 560) adapted to the formations, in particular the recesses, a relative displacement of the engagement components (30, 40; 230, 240; 330, 340; 430, 440; 530, 540) with respect to the degree of freedom (4; 104),
- the belt (60; 160a, 160b; 460; 560) is configured such that in case of engagement of the belt (60; 160a, 160b; 460; 560) in the pulley (10; 110a, 110b; 210; 310; 410; 510) a relative displacement of the engagement components (30, 40; 230, 240; 330, 340; 430, 440; 530, 540) in relation to the degree of freedom (4; 104) is prevented,
**characterized in that**
- at least one stopper component (50; 150a, 150b; 550) is provided which
- in case of the first relative position of the engagement components (30, 40; 530, 540) to each other is secured in a first position, where it is disposed completely within an interior space (46) defined by the engagement components (30, 40; 530, 540), and
- in case of the second relative position of the engagement components (30, 40) to each other may assume a second position or assumes a second position due to displacement of the engagement components (530, 540) into the second relative position in which it protrudes from the interior space (46) to the outside at least partially
- and/or the degree of freedom allows at least also a mobility of the engagement components in an axial direction, wherein a first spring device (224; 324; 424; 524) is disposed between the engagement components (230, 240; 330, 340; 430, 440; 530, 540) by means of which force is applied to the engagement components (230, 240; 330, 340; 430, 440) from the first relative position in the direction of the second relative position in the axial direction.

2. The set according to claim 1, **characterized in that**
the pulley (10; 110a, 110b; 210) is a sprocket pulley (10; 110a, 110b; 210), wherein the partial engagement zones (32, 42; 232, 242) of both engagement components (30, 40; 230; 240) include toothwork (34, 44; 234, 244) where the teeth are at least partially aligned with each other in the first relative position.

3. The set according to claim 1 or 2, **characterized in that**
the degree of freedom comprises a rotative mobility around the rotation axis (4; 104) of the pulley (10; 110a, 110b; 210), wherein preferably the partial engagement zones (32, 42; 232, 242) of both engagement components (30, 40; 230; 240) each extend over the entire periphery of the pulley (10; 110a, 110b; 210).

4. The set according to any of the preceding claims, **characterized in that**
between the engagement components (30, 40; 130, 140; 230, 240; 330, 340; 430, 440; 530, 540) a first spring device (24; 224; 324, 524) is provided by means of which the engagement components (30, 40; 130, 140; 230, 240; 330, 340; 430, 440; 530, 540) can be mutually interlocked such that in case of the first relative position spring force is applied thereon in the direction of the second relative position.

5. The set according to any of the preceding claims, **characterized in that**
securing of the stopper component (50; 150a, 150b) in the first relative position is effected by a securing section (36) provided on one of the engagement components, and release of the stopper component (50; 150a, 150b) in the second relative position is made possible by a recess (38; 138a, 138b) provided on one of the engagement components (30).

6. The set according to any of the preceding claims, **characterized in that**
a second spring device (52; 152; 152b) is provided by means of which spring force is applied to the stopper component (50; 150a, 150b) in the direction of the second position, while it is secured in the first position.

7. The set according to any of the preceding claims, **characterized in that**
the engagement components (330, 340; 430, 440; 530, 540) are movable one relative to the other exclusively in the axial direction.

8. The set according to any of the claims 1 to 6, **characterized in that**
the engagement components (230, 240) starting from the first relative position at least in a first partial phase of their relative movement are movable one relative to the other in a superimposed axial and rotative direction.

9. The set according to claim 8, **characterized in that**
the engagement components (230, 240) in a second partial phase subsequent to the first partial phase of the relative movements are movable one relative to the other exclusively in the axial direction.

10. The set according to any of the preceding claims, **characterized by**
at least one shifting link (254, 256; 354; 454) by means of which the relative mobility of the engagement components (230, 240; 330, 340; 430, 440) one relative to the other is defined.

11. A work spindle for a machine tool comprising
- a spindle main body (70; 170; 470; 570),
- a variable clamping device (190) provided on the spindle main body (70; 170; 470; 570) for accommodation of a workpiece or tool, and
- a pivot-mounted actuator (20, 180) around a spindle main axis (104) opposite the spindle main body (70; 170; 470; 570),
wherein
- the clamping device (190) is configured such that it is variable by a relative movement of the actuator (20; 180) relative to the spindle main body (70; 170; 470; 570),
**characterized in that**
a pulley (10; 110a, 110b; 210; 310; 410; 510) of a set according to any of the claims 1 to 10 is provided in a rotatably fixed manner to the spindle main body (70; 170; 470; 570) and/or in a rotatably fixed manner to the actuator (180), with a belt of the set according to any of the claims 1 to 10 in engagement therein, wherein upon a relative displacement of the engagement components (30, 40; 230, 240; 330, 340; 430, 440; 530, 540) relative to another from the first relative position to the second relative position
- by means of the stopper component (50; 150a, 150b; 550) a form-fit or a frictionally engagement coupling between the spindle main body (70; 170; 570) and the actuator (20; 180) is effected, or
- by means of the axial displacement of one of the engagement components (230; 330; 430; 530) a form-fit or a frictionally engagement coupling between the spindle main body (470; 570) and the actuator is effected.

12. The work spindle according to claim 11, **characterized in that** on the actuator (20; 180) or on the spindle main body (70; 170; 470; 570) corresponding to the stopper component (50; 150a, 150b; 550) a recess (72; 139a, 139b; 570) limited in the circumferential direction is provided, in which the stopper component (50; 150a, 150b; 550) can engage in the second position thereof, or corresponding to the displaced engagement component (230; 330; 430) a profiling (471) is provided.

13. The work spindle according to claim 11 or 12, **characterized in that**
- a first pulley (110a; 210) is provided in a rotatably fixed manner to the spindle main body (170) and a second pulley (110b; 210b) is provided in a rotatably fixed manner to the actuator (180), and
- the pulleys (110a, 110b) are aligned adjacent one to the other in the axial direction so that at least one of the stopper components (150a, 150b) of one of the pulleys (110a, 110b) may contact the other pulley (110b, 110a) in the second position thereof in a form-fit or a frictionally engaged manner, or
- the pulleys (210, 210b) are provided in the axial direction adjacent one to the other and with facing profilings (231, 231 b) so that at least one engagement section (230, 230b) of one of the pulleys (210, 210b) may contact the other pulley (210b, 210) in the second position thereof in a form-fit manner.

14. A workpiece or tool holder (106) of a machine tool comprising
- a stationary frame (107) and
- a work spindle (108),
**characterized in that**
the work spindle (108) is configured according to any of the claims 11 to 13, wherein both the spindle main body (170) and the actuator (180) are pivot-mounted to be coaxially rotating relative to the frame (107).

## Revendications

1. Ensemble composé d'une poulie à courroie (10; 110a, 110b; 210; 310; 410; 510) et d'une courroie (60; 160a, 160b; 460; 560),
dans lequel la poulie à courroie présente une zone de contact (12; 212; 312; 412; 512) s'étendant sur la périphérie extérieure pour la transmission de force de la poulie à courroie (10; 110a, 110b; 210; 310; 410; 510) à une courroie (60; 160a, 160b; 460; 560) ou d'une courroie (60; 160a, 160b; 460; 560) à la poulie à courroie (10; 110a, 110b; 210; 310; 410; 510), dans lequel la poulie à courroie (10; 110a, 110b; 210; 310; 410; 510) présente au moins deux composants en prise (30, 40; 230, 240; 330, 340; 430, 440; 530, 540) séparés et mobiles l'un par rapport à l'autre entre une première position relative et une deuxième position relative en ce qui concerne un degré de liberté (4; 104), dans lequel
- les deux composants en prise (30, 40; 230, 240; 330, 340; 430, 440; 530, 540) forment chacun une zone de contact partielle (32, 42; 232, 242, 432, 442; 532a, 532b, 542) de la zone de contact (12; 212; 312; 412; 512) s'étendant sur la périphérie extérieure de la poulie à courroie, et
- les deux zones de contact partielles (32, 42; 232, 242, 432, 442; 532a, 532b, 542) présentent des formations, en particulier avec des creux (34, 44; 234, 244; 314; 414), qui sont aptes ensemble, lors du contact d'une courroie (60; 160a, 160b; 460) adaptée aux formations, en particulier aux creux, à empêcher un déplacement relatif des composants en prise (30, 40; 230, 240; 330, 340; 430, 440; 530, 540) en ce qui concerne le degré de liberté (4; 104),
- la courroie (60; 160a, 160b; 460; 560) est réalisée de telle manière que, dans le cas d'une prise de la courroie (60; 160a, 160b; 460; 560) dans la poulie à courroie (10; 110a, 110b; 210; 310; 410; 510), un déplacement relatif des composants en prise (30, 40; 230, 240; 330, 340; 430, 440; 540) en ce qui concerne le degré de liberté (4; 104) soit empêché,
**caractérisé en ce que**:
- il est prévu au moins une pièce d'arrêt (50; 150a, 150b; 550), qui
- dans le cas de la première position relative des composants en prise (30, 40; 530, 540) l'un par rapport à l'autre, est fixée dans une première position, dans laquelle elle est disposée entièrement à l'intérieur d'un espace intérieur (46) défini par les composants en prise (30, 40; 530, 540), et
- dans le cas de la deuxième position relative des composants en prise (30, 40) l'un par rapport à l'autre, peut occuper une deuxième position ou occupe, par le déplacement des composants en prise (530, 540) dans la deuxième position relative, une deuxième position dans laquelle elle sort vers l'extérieur au moins localement hors de l'espace intérieur (46),
- et/ou le degré de liberté permet au moins aussi une mobilité des composants en prise dans une direction axiale, dans lequel un premier système de ressorts (224; 324; 424; 524) est disposé entre les composants en prise (230, 240; 330, 340; 430, 440; 530, 540), par lequel les composants en prise (230, 240; 330, 340; 430, 440) sont poussés par force en direction axiale de leur première position relative en direction de leur deuxième position relative.

2. Ensemble selon la revendication 1, **caractérisé en ce que** la poulie à courroie (10; 110a, 110b; 210) se présente sous la forme d'une poulie à courroie dentée (10; 110a, 110b; 210), dans lequel les zones de contact partielles (32, 42; 232, 242) des deux composants en prise (30, 40; 230, 240) présentent des dentures (34, 44; 234, 244), dont les dents sont alignées les unes avec les autres au moins en partie dans la première position relative.

3. Ensemble selon la revendication 1 ou 2, **caractérisé en ce que** le degré de liberté comprend une mobilité rotative autour de l'axe de rotation (4; 104) de la poulie à courroie (10; 110a, 110b; 210), dans lequel les zones de contact partielles (32, 42; 232, 242) des deux composants en prise (30, 40; 230, 240) s'étendent de préférence chacune sur la périphérie totale de la poulie à courroie (10; 110a, 110b; 210).

4. Ensemble selon l'une quelconque des revendications précédentes, **caractérisé en ce qu'**il est prévu entre les composants en prise (30, 40; 130, 140; 230, 240; 330, 340; 430, 440; 530, 540) un premier système de ressorts (24; 224; 324; 524) au moyen duquel les composants en prise (30, 40; 130, 140; 230, 240; 330, 340; 430, 440; 530, 540) peuvent être serrés l'un contre l'autre, de telle manière que, dans le cas de la première position relative, ils soient poussés par la force des ressorts en direction de la deuxième position relative.

5. Ensemble selon l'une quelconque des revendications précédentes, **caractérisé en ce que** la fixation de la pièce d'arrêt (50; 150a, 150b) dans la première position relative est effectuée par une partie de fixation (36) prévue sur un des composants en prise et la libération de la pièce d'arrêt (50; 150a, 150b) dans la deuxième position relative est rendue possible par un évidement (38; 138a, 138b) prévu sur un des composants en prise (30).

6. Ensemble selon l'une quelconque des revendications précédentes, **caractérisé en ce qu'**il est prévu un deuxième système de ressorts (52; 152a, 152b), au moyen duquel la pièce d'arrêt (50; 150a, 150b) est poussée par la force des ressorts en direction de sa deuxième position, pendant qu'elle est fixée dans sa première position.

7. Ensemble selon l'une quelconque des revendications précédentes, **caractérisé en ce que** les composants en prise (330, 340; 430, 440; 530, 540) sont mobiles l'un par rapport à l'autre exclusivement dans la direction axiale.

8. Ensemble selon l'une quelconque des revendications 1 à 6, **caractérisé en ce que** les composants en prise (230, 240) sont mobiles l'un par rapport à l'autre dans une direction axiale et rotative superposée à partir de la première position relative au moins dans une première phase partielle de leur déplacement relatif.

9. Ensemble selon la revendication 8, **caractérisé en ce que** les composants en prise (230, 240) sont mobiles l'un par rapport à l'autre exclusivement en direction axiale dans une deuxième phase partielle des déplacements relatifs faisant suite à la première phase partielle.

10. Ensemble selon l'une quelconque des revendications précédentes, **caractérisé par** au moins un guidage à coulisse (254, 256; 354; 454), au moyen de laquelle la mobilité relative des composants en prise (230, 240; 330, 340; 430, 440) l'un par rapport à l'autre est définie.

11. Broche de travail pour une machine-outil avec
- un corps principal de broche (70; 170; 470; 570),
- un dispositif de serrage réglable (190) prévu sur le corps principal de broche (70; 170; 470; 570) pour monter une pièce ou un outil, et
- un organe de réglage (20; 180) monté de façon rotative autour de l'axe principal de broche (104) par rapport au corps principal de broche (70; 170; 470; 570),
dans laquelle
- le dispositif de serrage (190) est réalisé de telle manière qu'il soit réglable par un déplacement relatif de l'organe de réglage (20; 180) par rapport au corps principal de broche (70; 170; 470; 570),
**caractérisée en ce que**
il est prévu une poulie à courroie (10; 110a, 110b; 210; 310; 410; 510) d'un ensemble selon l'une quelconque des revendications 1 à 10, montée solidairement en rotation avec le corps principal de broche (70; 170; 470; 570) et/ou solidairement en rotation avec l'organe de réglage (180), avec laquelle une courroie de l'ensemble selon l'une quelconque des revendications 1 à 10 est en prise, dans laquelle, lors d'un déplacement relatif des composants en prise (30, 40; 230, 240; 330, 340; 430, 440; 530, 540) l'un par rapport à l'autre de la première position relative à la deuxième position relative
- un couplage par emboîtement ou par friction entre le corps principal de broche (70; 170; 570) et l'organe de réglage (20; 180) est provoqué au moyen de la pièce d'arrêt (50; 150a, 150b; 550), ou
- un couplage par emboîtement ou par friction entre le corps principal de broche (470; 570) et l'organe de réglage est provoqué au moyen du déplacement axial d'un des composants en prise (230; 330; 430; 530).

12. Broche de travail selon la revendication 11, **caractérisée en ce qu'**il est prévu sur l'organe de réglage (20; 180) ou sur le corps principal de broche (70; 170; 470; 570), en correspondance avec la pièce d'arrêt (50; 150a, 150b; 550), un évidement (72; 139a, 139b; 570) limité en direction périphérique, dans lequel la pièce d'arrêt (50; 150a, 150b; 550) peut s'engager dans sa deuxième position, ou il est prévu un profilage (471) en correspondance avec le composant en prise déplacé (230; 330; 430).

13. Broche de travail selon la revendication 11 ou 12, **caractérisée en ce que**
- il est prévu une première poulie à courroie (110a; 210) montée solidairement en rotation sur le corps principal de broche (170) et il est prévu une deuxième poulie à courroie (110b; 210b) montée solidairement en rotation sur l'organe de réglage (180), et
- les poulies à courroie (110a, 110b) sont orientées à proximité l'une vers l'autre en direction axiale, de telle manière qu'au moins une des pièces d'arrêt (150a, 150b) d'une des poulies à courroie (110a, 110b) dans sa deuxième position puisse venir en contact par emboîtement ou par friction avec l'autre poulie à courroie (110b, 110a), ou
- les poulies à courroie (210, 210b) sont munies de profilages (231, 231b) proches l'un de l'autre et tournés l'un vers l'autre en direction axiale, de telle manière qu'au moins une partie de prise (230, 230b) d'une des poulies à courroie (210, 210b) dans sa deuxième position puisse venir en contact par emboîtement ou par friction avec l'autre poulie à courroie (210b, 210).

14. Dispositif de maintien de pièce ou d'outil (106) d'une machine-outil, avec
- un bâti stationnaire (107), et
- une broche de travail (108),
caractérisé en en ce que la broche de travail (108) est réalisée selon l'une quelconque des revendications 11 à 13, dans lequel aussi bien le corps principal de broche (170) que l'organe de réglage (180) sont montés coaxialement de façon rotative par rapport au bâti (107).
